# NEUE EUROPÄISCHE PATENTSCHRIFT

(11) **EP 1 543 712 B2**
(45) Veröffentlichungstag und Bekanntmachung des Hinweises auf die Entscheidung über den Einspruch: **24.11.2010**
(45) Hinweis auf die Patenterteilung: 25.04.2007
(21) Anmeldenummer: 04028787.2
(22) Anmeldetag: 04.12.2004
(51) Int. Cl.: A01D 41/127

(54) **Verfahren und Vorrichtung zur Regelung von Arbeitsorganen eines Mähdreschers**
Method and device for regulating the working means of a combine
Procédé et dispositif pour régler les organes de travail d'une moissonneuse-batteuse

(30) Priorität: 19.12.2003 DE 10360597
(43) Veröffentlichungstag der Anmeldung: 22.06.2005
(73) Patentinhaber: CLAAS Selbstfahrende Erntemaschinen GmbH, 33428 Harsewinkel (DE)
(72) Erfinder: Behnke, Willi, 33803 Steinhagen (DE); Baumgarten, Joachim, Dr., 48361 Beelen (DE); Fitzner, Werner, 48336 Sassenberg (DE)
(74) Vertreter: Roth, Klaus

(56) Entgegenhaltungen:
- EP-A- 0 339 141
- EP-A- 0 463 240
- EP-A- 0 728 409
- EP-A- 1 038 429
- EP-A1- 1 297 733
- EP-A2- 1 371 278
- EP-A2- 1 516 522
- DE-A1- 2 445 045
- DE-A1- 19 618 042
- BAUMGARTEN J.; BEHNKE W.; DIEKHANS N.: 'Sensor zur Korndetektion in der überkehr für eine verbesserte' TAGUNG LANDTECHNIK 2003 Seiten 181 - 186

## Beschreibung

Die Erfindung betrifft ein Verfahren zur Regelung wenigstens eines Betriebsparameters der Arbeitsorgane eines Mähdreschers nach dem Oberbegriff des Anspruchs 1 sowie eine Vorrichtung zur Durchführung dieses Verfahrens nach dem Oberbegriff des Anspruchs 21.

Aus dem Stand der Technik sind eine Vielzahl von Systemen zur Ermittlung von Kornverlusten bekannt geworden, die die Kornverlustinformation schließlich zur Änderung bestimmter Betriebsparameter der Arbeitsorgane eines Mähdreschers nutzen. So offenbart die EP 0 339 141 beispielsweise ein System, bei dem Korndetektionseinrichtungen an verschiednen Stellen innerhalb des Mähdreschers zur Erfassung der verschiedenen Kornströme angeordnet sind. Über Verrechnungsalgorithmen werden schließlich aus den gewonnenen Informationen Kornverlustwerte ermittelt, die schließlich für den Betreiber des Mähdreschers als Indikator zur Änderung von diversen Betriebsparametern des Mähdreschers dienen. Um die aufgrund der ermittelten Kornverluste notwenigen Änderungen bestimmter Betriebsparameter des Mähdreschers unabhängiger von dem jeweiligen Wissen und Können des Betreibers zu machen, offenbart unter anderem die EP 0 728 409 ein System zur automatischen Regelung eines Abschnitts innerhalb des Mähdreschers in Abhängigkeit von den sensierten Kornverlusten. Derartige Verfahren haben vor allem den Nachteil, dass die Kornverluste erst ermittelbar sind, nachdem das Erntegut den Mähdrescher durchlaufen hat, sodass erst spät auf sich ändernde Abscheidebedingungen reagiert werden kann.

Die DE 196 18 042 offenbart einen Wurfelevator, der im Überkehrsystem eines Mähdreschers eingesetzt wird. Die Überkehr wird im Wurfelevator nachgedroschen und der nachgedroschene Erntegutstrom wird vom Wurfelevator zu einem Vorbereitungsboden und über diesen der Reinigung erneut zugeführt. Innerhalb des Wurfelevators ist ein Sensor zur Erfassung der Überkehrmenge angeordnet. Das von dem Sensor erzeugte elektrische Signal wird an eine Steuereinrichtung übertragen, die in Abhängigkeit dieser Signale Aktuatoren zur Einstellung der Drescheinrichtung, der Siebe und des Gebläses der Reinigung betätigt.

Auch diese Vorrichtung weist den Nachteil auf, dass die Üperkehrerntegutmenge erst ermittelbar ist, wenn das Erntegut den Mähdrescher durchlaufen hat, so dass auch hier eine stark verzögerte Reaktion auf die Erntebedingungen erfolgt.

Es ist deshalb Aufgabe der Erfindung ein Verfahren und eine zugehörige Vorrichtung zu entwickeln, welches frühzeitig sich ändernde Erntebedingungen wahrnimmt und damit eine effiziente Anpassung von Betriebsparametern landwirtschaftlicher Arbeitsmaschinen an diese sich ändernden Erntebedingungen ermöglicht.

Diese Aufgabe wird erfindungsgemäß durch die kennzeichnenden Merkmale der Ansprüche 1 und 21 gelöst.

Indem der Überkehreinrichtung des Mähdreschers eine Sensiereinrichtung zur Detektion des Überkehrerntegutstromes zugeordnet ist und die von dieser Sensiereinrichtung generierten Überkehrerntegutstromsignale zur Regelung eines oder mehrerer Betriebsparameter wenigstens eines Arbeitsorgans des Mähdreschers herangezogen werden, wird sichergestellt, dass nunmehr frühzeitig und effizient auf sich ändernde Erntebedingungen reagiert werden kann.

Eine besonders effektive Regelung ergibt sich dann, wenn das wenigstens eine Arbeitsorgan die sehr komplexen Zusammenhängen unterliegende Reinigungseinrichtung und die zu optimierenden Betriebsparameter die Reinigungsgebläsedrehzahl, die Obersiebweite und die Untersiebweite sind.

Die Präzision der Regelung wird dadurch erhöht, dass die Überkehrerntegutstromsignale neben der Überkehrerntegutmenge auch den Überkehrkornanteil umfasst, da beide Parameter ein Indikator für die Erntebedingung und damit für die Effizienz der Arbeitsweise des Mähdreschers sind.

Damit die erfindungsgemäße Regelung auf einfache Weise realisierbar ist, umfasst die Sensiereinrichtung eine Auswert- und Anzeigeeinheit, die die Überkehrerntegutstromsignale in Abhängigkeit von den Betriebsparametern der Reinigungseinrichtung erfasst.

In vorteilhafter Weiterbildung der Erfindung sind dem Mähdrescher zudem an sich bekannte Sensiereinrichtungen zur Erfassung der Kornverluste zugeordnet, die eine Erfassung von Abscheideverlusten und Reinigungsverlusten in Abhängigkeit von verschiedenen Betriebsparametern ermöglichen. Dies hat insbesondere den Vorteil, dass der Betreiber über die Auswirkungen der Regelung auf die Kornverluste informiert ist.

Erfindungsgemäß wird der Auswert- und Anzeigeeinheit ein Regler zugeordnet, in dem Regelalgorithmen editierbar hinterlegt sind, die die verschiedenen Betriebsparameter des Arbeitsorgans in Abhängigkeit von der ermittelten Überkehrentegutmenge und dem ermittelten Überkehrkornanteil optimieren.

Eine für den Betreiber komfortable Umsetzung ergibt sich dann, wenn der Regler selbsttätig den oder die anzuwenden Regelalgorithmen zur Optimierung der Betriebsparameter auswählt. Zudem wird die Regelung dadurch unabhängiger von speziellen Kenntnissen des Betreibers der landwirtschaftlichen Arbeitsmaschine.

Um die Qualität der Regelung weiter zu erhöhen berücksichtigen die hinterlegten Regelalgorithmen erntegutspezifische Parameter wie etwa den Erntegutdurchsatz, die Erntegutart und Ernteguteigenschaften, da die Einstellung verschiedener Betriebsparameter maßgeblich von den erntegutspezifischen Parametern beeinflusst werden.

Im einfachsten Fall kann die Inbetriebnahme des Reglers und damit der Start der Regelung dadurch bewirkt werden, dass der Betreiber des Mähdreschers den Regelvorgang auslöst, wobei die von den Sensiereinrichtungen im Moment des Auslösens der Regelung ermittelte Überkehrerntegutmenge und der Überkehrkornanteil die Sollwerte und damit den Arbeitspunkt der Regelung bilden.

Im einfachsten Fall kann die Inbetriebnahme der Regelung durch den Betreiber des Mähdreschers dadurch erfolgen, dass der Betreiber an Hand der ihm angezeigten Kornverluste einen Arbeitspunkt bei niedrigen Kornverluste und einer seinen Anforderungen genügenden Kornsauberkeit, dem sogenannten subjektive Sauberkeitshorizont, auswählt und die Regelung startet.

Damit der Bediener des Mähdreschers optimale Bedingungen für die Entscheidung welcher Arbeitspunkt der Regelung zugrunde gelegt werden soll vorfindet, ist es von Vorteil, wenn der Mähdrescher vor Inbetriebnahme der Regelung eine sogenannte Eichfahrt mit annähernd konstanter Geschwindigkeit oder annähernd konstantem Erntegutdurchsatz absolviert.

Eine besonders effiziente Optimierung der Untersiebweite ergibt sich dann, wenn der hierfür vorgesehene Regelalgorithmus bei ansteigender Überkehrerntegutmenge und zugleich ansteigendem Überkehrkornanteil die Untersiebweite solange vergrößert und analog bei abnehmender Überkehrerntegutmenge und zugleich abnehmendem Überkehrkornanteil die Untersiebweite verringert bis Überkehrerntegutmenge und Überkehrkornanteil annähernd den vordefinierten Sollwerten entsprechen.

Aufgrund des unterschiedlichen Einflusses der Betriebsparameter auf die Effizienz der Erntegutabscheidung wird eine effektive Optimierung der Obersiebweite dann erreicht, wenn der hierfür vorgesehene Regelalgorithmus bei ansteigender Überkehrerntegutmenge und zugleich abnehmendem Überkehrkornanteil die Obersiebweite solange verringert und umgekehrt bei abnehmender Überkehrerntegutmenge und zunehmendem Überkehrkornanteil die Obersiebweite vergrößert bis Überkehrerntegutmenge und Überkehrkornanteil annähernd den vordefinierten Sollwerten entsprechen.

Eine besonders effiziente Optimierung der Reinigungsgebläsedrehzahl ergibt sich hingegen dann, wenn der hierfür vorgesehene Regelalgorithmus bei abnehmender Überkehrerntegutmenge und zugleich ansteigendem Überkehrkornanteil die Reinigungsgebläsedrehzahl solange vergrößert und bei zunehmender Überkehrerntegutmenge und zugleich zunehmendem Überkehrkornanteil die Reinigungsgebläsedrehzahl verringert bis Überkehrerntegutmenge und Überkehrkornanteil annähernd den vordefinierten Sollwerten entsprechen. Aufgrund der komplexen Zusammenhänge zwischen Reinigungsgebläsedrehzahl und Abscheideeffizienz ist es von Vorteil, wenn bei abnehmender Überkehrerntegutmenge und abnehmendem Überkehrkornanteil der Regelalgorithmus die Reinigungsgebläsedrehzahl solange verringert sowie bei zunehmender Überkehrerntegutmenge und abnehmendem Überkehrkornanteil die Reinigungsgebläsedrehzahl solange erhöht, bis der vordefinierten Sollwerte für die Überkehrerntegutmenge und den Überkehrkornanteil wieder erreicht sind.

Damit die Regelung die Einstellsysteme nicht überfordert oder für eine vernünftige Funktionsweise nur sinnvolle Einstellungen zulässt, können für die von dem Regler zu ermittelnden optimierten Betriebsparameter durch obere und/oder untere Grenzwerte beschränkt sein. Unter gleichem Aspekt können die Regelalgorithmen zudem sogenannte Störgrößen und diesen zugeordnete Toleranzbereiche berücksichtigen, wobei bei deren Über- oder Unterschreitung der Regelvorgang abgebrochen und der Betreiber zur Eingabe eines neuen Arbeitspunktes aufgefordert wird. Besonders wirkungsvolle Störgrößen sind in diesem Zusammenhang die Ernteguteigenschaften, das Verhältnis von Korndurchsatz zu Überkehrmenge sowie das Verhältnis von Korndurchsatz zu Gutschichthöhe.

Weitere vorteilhafte Ausführungen sind Gegenstand weiterer Unteransprüche und werden nachfolgend an Hand eines in mehreren Figuren dargestellten Ausführungsbeispiels beschrieben. Es zeigen:
- Fig.1: eine Seitenansicht des erfindungsgemäßen Mähdreschers
- Fig. 2: die schematische Darstellung der erfindungsgemäßen Regelstruktur
- Fig. 3: die schematische Darstellung des Regelalgorithmus "Untersiebweite"
- Fig. 4: die schematische Darstellung des Regelalgorithmus "Obersiebweite"
- Fig. 5: die schematische Darstellung des Regelalgorithmus "Reinigungsgebläsedrehzahl"

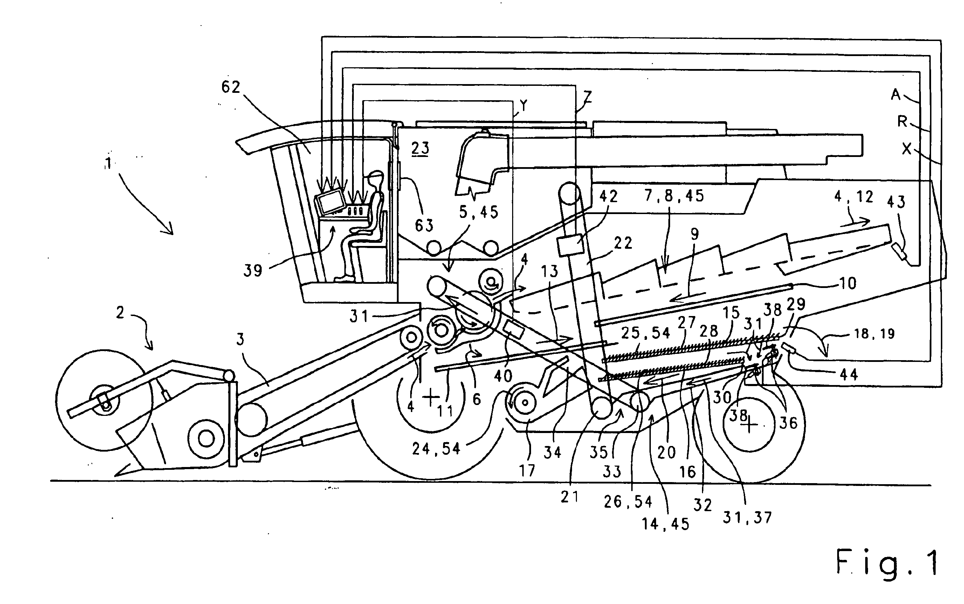

In Fig. 1 ist ein Mähdrescher 1 dargestellt, dessen frontseitigem Schrägförderer 3 ein Schneidwerk 2 zugeordnet ist. In an sich bekannter Weise übergibt der Schrägförderer 3 den von dem Mähwerk 2 geernteten Erntegutstrom 4 in seinem rückwärtigen Bereich Dreschorganen 5 an welchen ein erster im Wesentlichen aus Körnern, unausgedroschenen Ähren, Kurzstroh und Spreu bestehender Erntegutteilstrom 6 abgeschiedenen wird. Im rückwärtigen Bereich der Dreschorgane gelangt der verbleibende Erntegutstrom 4 auf eine als Hordenschüttler 7 ausgeführte Trenneinrichtung 8 in deren untenseitigem Bereich ein weiterer im Wesentlichen ebenfalls aus Körnern, unausgedroschenen Ähren, Kurzstroh und Spreu bestehender Erntegutteilstrom 9 abgeschieden wird. Während der am Hordenschüttler 7 abgeschiedene Erntegutteilstrom 9 über einen Rücklaufboden 10 dem sogenannten Vorbereitungsboden 11 zugeführt wird gelangt der an den Dreschorganen 5 abgeschiedene erste Erntegutteilstrom 6 unmittelbar auf den Vorbereitungsboden 11. Im rückwärtigen Bereich des Hordenschüttlers 7 wird der nunmehr im Wesentlichen aus Stroh und einem geringen Restkornanteil, den Abscheideverlusten 12, bestehende Erntegutstrom 4 aus dem Mähdrescher 1 herausgefördert.

Die auf den Vorbereitungsboden 11 gelangten Erntegutteilströme 6, 9 werden als gemeinsamer Erntegutstrom 13 der dem Vorbereitungsboden 11 nachgeordneten Reinigungseinrichtung 14 übergeben. In an sich bekannter Weise wird die Reinigungseinrichtung 14 von in vertikaler Richtung stufig zueinander angeordneten Reinigungssieben, dem Obersieb 15 sowie dem Untersieb 16, und zumindest einem einen Luftstrom durch die Siebanordnungen 15, 16 fördernden Reinigungsgebläse 17 gebildet. Die in der Regel schwingend bewegte, luftdurchströmde Siebanordnung 15, 16 trennt den über den Vorbereitungsboden 11 an sie übergebenen Erntegutstrom 13 im Wesentlichen in Korn- und Nichtkornbestandteile. Dabei wird im rückwärtigen Bereich der Reinigungseinrichtung 14 ein überwiegend aus Kurzstroh und Spreu sowie einem geringen Anteil Körnern, den sogenannten Reinigungsverlusten 18, bestehender Gutstrom 19 aus dem Mähdrescher herausgefördert.

Ein weiterer durch die Siebanordnungen 15, 16 hindurchgetretener, im Wesentlichen aus Körnern und zu einem geringen Anteil aus Beimengungen bestehender Körnerstrom 20 wird in an sich bekannter Weise mittels einer Förderschneckenanordnung 21 und einem Körnerelevator 22 einem Korntank 23 zur Speicherung des Körnerstroms 20 zugeführt. Die Menge und Zusammensetzung des durch die Reinigungssiebe 15, 16 hindurchtretenden Körnerstromes 20 kann einerseits durch eine Änderung der Reinigungsgebläsedrehzahl 24 sowie eine Änderung der Weite des Durchgangsspaltes 25, 26 zwischen benachbarten Lamellen 27, 28 der einzelnen Reinigungssiebe 15, 16, die sogenannte Obersiebweit 25 bzw. Untersiebweite 26 beeinflusst werden. Aus dem Stand der Technik ist es zudem bekannt die Effizienz der Reinigungseinrichtung 14 dadurch zu beeinflussen, dass die Schwingfrequenz der Reinigungssiebe 15, 16 änderbar ist oder die den Siebanordnungen 15, 16 zugeordneten Siebflächen 29, 30 in Abhängigkeit von der Struktur des zu reinigenden Erntegutes austauschbar sind, wobei sich die verschiedenen Siebflächen 29, 30 in der Größe ihrer Durchtrittsöffnungen unterscheiden.

Die Obersieblamellen 27 weisen im rückwärtigen Endbereich des Obersiebes 15 einen größeren Anstand zueinander auf. Diese größere Obersiebweite 25 hat insbesondere die Funktion, dass in diesem Bereich über das Obersieb 15 geförderte unausgedroschene Ähren und noch mit Grannen versehene Körner abgeschieden werden können. Zugleich werden in diesem und im rückwärtigen Bereich des Untersiebes 16 auch Körner, Kurzstroh und Spreu abgeschieden, die zusammen einen sogenannten, den Mähdrescher 1 nicht verlassenden Überkehrerntegutstrom 31 bilden. Dieser Überkehrerntegutstrom 31 wird entlang einer Leitfläche 32 einer Ährenförderschnecke 33 zugeführt, die den Überkehrerntegutstrom 31 einem Ährenelevator 34 übergibt, der diesen schließlich wieder den Dreschorganen 5 zuführt. Die den Förderweg des Überkehrerntegutstromes 31 bestimmenden Organe, rückwärtiger Bereich der Siebanordnungen 15, 16, die Leitfläche 32, die Ährenförderschnecke 33 sowie der Ährenelevator 34 bilden die sogenannte Überkehreinrichtung 35. In erfindungsgemäßer Weise sind dem rückwärtigen Bereich der Reinigungssiebe 15, 16 Körnerstrommesseinrichtungen 36 zugeordnet, die den Anteil der Körner in dem Überkehrerntegutstrom 31, den Überkehrkornanteil 37, in noch näher zu beschreibender Weise ermitteln. Im einfachsten Fall können die Körnerstrommesseinrichtungen 36 von einer Vielzahl entlang der Breite der Reinigungssiebe 15, 16 zueinander beabstandet angeordneter an sich bekannter Stabsensoren 38 gebildet werden, die nach dem Körperschallprinzip die Kontakte mit in dem Überkehrerntegutstrom 31 enthaltenen Körner registrieren und hieraus in an sich bekannter Weise dem Überkehrkornanteil 37 proportionale Überkehrkornsignale X generieren, welche an eine noch näher zu beschreibende Auswert- und Anzeigeeinheit 39 übergeben werden. Zudem ist dem Ährenelevator 34 eine an sich bekannte und deshalb nicht näher beschriebene Volumenstromsensiereinrichtung 40 zugeordnet, die die den Ährenelevator 34 durchlaufende Überkehrerntegutmenge 41 erfassen kann, wobei sie Überkehrerntegutmengensignale Y generiert, die ebenfalls an die Auswert- und Anzeigeeinheit 39 übergeben werden. Details einer derartigen Anordnung gehen auch aus der DE 103 43 916.1 hervor.

Weiter ist dem Körnerelevator 22 des Mähdreschers 1 eine ebenfalls an sich bekannte und deshalb nicht näher beschriebene Volumenstromsensiereinrichtung 42 zur Detektion des den Körnerelevator 22 durchlaufenden Körnerstromes 20 zugeordente. Diese weitere Volumenstromsensiereinrichtung 42 generiert Körnersignale Z, die ebenfalls an die Auswert- und Anzeigeeinheit 39 übergeben werden. Zudem überstreichen die aus dem Mähdrescher 1 austretenden Gutströme 4, 19 in ihrem jeweiligen Austrittsbereich sogenannte Kornverlustsensoren 43, 44 die als an sich bekannte, nach dem Körperschallprinzip arbeitende Klopfsensoren ausgeführt sind. Dabei werden von den Kornverlustsensoren 43, 44 die noch in diesen Gutströmen 4, 19 enthaltenen Körner registriert und als Abscheideverlustsignale A und Reinigungsverlustsignale R an die Auswert- und Anzeigeeinheit 39 übermittelt.

Gemäß den vorherigen Ausführungen bilden die in den Mähdrescher 1 integrierten Dreschorgane 5, die Trenneinrichtung 8 sowie die Reinigungseinrichtung 14 die erfindungsgemäßen Arbeitsorgane 45. Es liegt im Rahmen der Erfindung, dass die Dreschorgane 5 und/oder die Trenneinrichtung 8 in an sich bekannter und deshalb nicht dargestellter Weise durch rotierende Dresch- und/oder Trennrotoren ersetzt sein können.

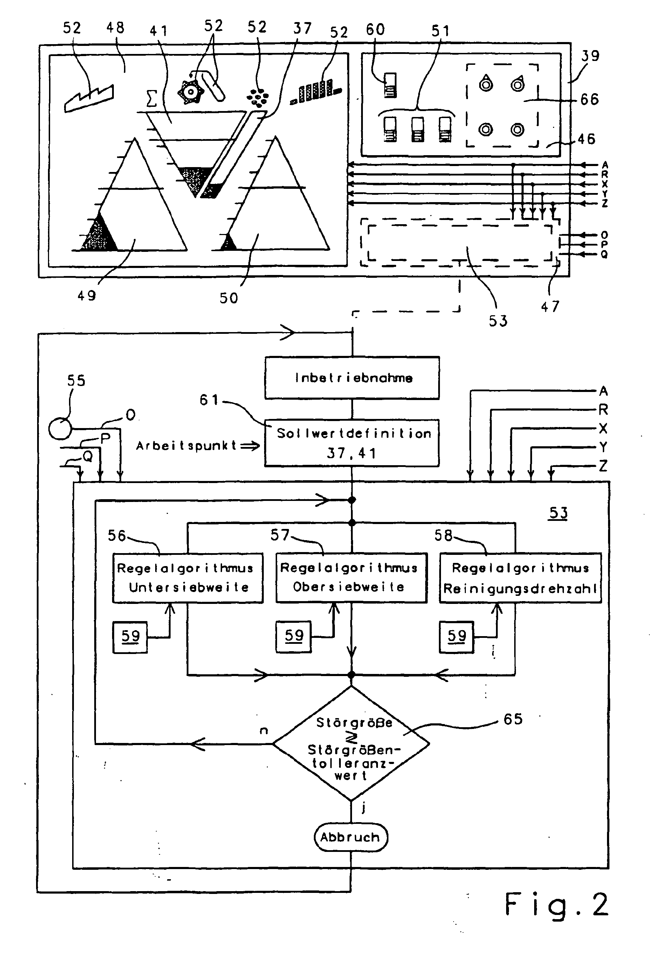

Nachfolgend werden das erfindungsgemäße Verfahren und die Vorrichtung zu dessen Durchführung schematisch an Hand der Fig. 2 bis 5 beschrieben. Gemäß Fig. 2 umfasst die Auswert- und Anzeigeeinheit 39 eine Eingabeeinheit 46, einen Rechen- und Speichermodul 47 sowie eine grafische Anzeigeeinheit 48. Die an die Auswert- und Anzeigeeinheit 39 übergebenen Abscheideverlustsignale A, Reinigungsverlustsignale R, Überkehrkornsignale X, Überkehrerntegutmengensignale Y sowie die Kornsignale Z werden von der Rechen- und Speichereinheit 47 so weiterverarbeitet und an die grafische Anzeigeeinheit 48 übergeben, dass in der grafischen Anzeigeeinheit 48 die Abscheideverluste 49, die Reinigungsverluste 50, die Überkehrerntegutmenge 41 sowie der Überkehrkornanteil 37 anzeigbar sind. Zur Verbesserung der Übersichtlichkeit können den einzelnen Anzeigen Sinnbilder 52 zugeordnet sein, aus denen der jeweils angezeigte Parameter 37, 41, 49, 50 ersichtlich wird.

Damit in erfindungsgemäßer Weise eine Regelung eines oder mehrere Betriebsparameter wenigstens eines Arbeitsorgans 45 in Abhängigkeit von der ermittelten Überkehrerntegutmenge 41 sowie dem Überkehrkornanteil 37 erfolgt, ist dem Rechen- und Speichermodul 47 zudem ein noch näher zu beschreibender Regler 53 zugeordnet. Im Folgenden wird die erfindungsgemäße Regelung an Hand des Arbeitsorgans 45 Reinigungseinrichtung 14 beschrieben, wobei die zu regelnden Betriebsparameter 54 die Reinigungsgebläsedrehzahl 24, die Obersiebweite 25 sowie die Untersiebweite 26 sein können. Es liegt im Rahmen der Erfindung, dass beispielsweise im Falle eines überproportional hohen Anteils unausgedroschener Ähren im Überkehrerntegutstrom 31 das zu regelnde Arbeitsorgan 45 die Dreschorgane 5 und der zu regelnde Betriebsparameter 54 die Dreschtommeldrehzahl einer oder mehrerer Dreschtrommeln sein können.

Damit eine Regelung von Betriebsparametern 54 möglich wird werden an den Regler 53 des Rechen- und Speichermoduls 47 zudem die momentanen Werte der Betriebsparameter 54 übergeben. Dies kann im einfachsten Fall dadurch erfolgen, dass dem Reinigungsgebläse 17 ein an sich bekannter Drehzahlsensor 55 zugeordnet ist, der den Momentanwert der Reinigungsgebläsedrehzahl 24 ermittelt und als Reinigungsgebläsedrehzahlsignal O an den Regler 53 übergibt. Aufgrund dessen, dass die Obersiebweite 25 und die Untersiebweite 26 in der Regel in Stufen verstellt werden, können dem Regler 53 ferner Obersiebweitensignale P und Untersiebweitensignale Q übergeben werden, die die jeweils eingestellte Siebweite 26, 27 repräsentieren. Auf diese Weise wird sichergestellt, dass der Regler 53 stets sowohl auf die momentanen Werte O, P, Q der Betriebsparameter 54 als auch auf die zugehörigen Signale A, R, X, Y, Z der verschiedenen Gutströme 12, 18, 20, 37, 41 zugreifen kann. Es liegt im Rahmen der Erfindung, dass aus Vereinfachungsgründen die verschiednen Kornverlustsignale A, R zu einem nicht dargestellten einzigen Kornverlustsignal zusammengefasst werden könnten.

Aufgrund des zum Teil erheblich voneinander abweichenden Einflusses einer Änderung der verschiedenen Betriebsparameter 24 - 26 auf die Abscheidecharakteristik einer Reinigungseinrichtung 14 im Mähdrescher 1 sind in dem Regler 53 auf die jeweiligen Betriebsparameter 24 - 26 abgestimmte Regelalgorithmen 56, 57, 58 editierbar hinterlegt. Zudem wirken sich erntegutspezifische Parameter wie etwa der Erntegutdurchsatz, die Erntegutart und Ernteguteigenschaften, beispielsweise die Erntegutfeuchte, sehr unterschiedlich auf die erforderlichen Betriebsparameter 24 - 26 aus. Deshalb ist in einer vorteilhaften Weiterbildung der Erfindung vorgesehen, dass die in dem Regler 53 hinterlegten Regelalgorithmen 56 - 58 erntegutspezifische Parameter 59 in der Weise berücksichtigen, dass die optimierten Betriebsparameter 24 - 26 auch in Abhängigkeit von diesen entegutspezifischen Parametern 59 bestimmt werden.

Die Inbetriebnahme des die Regelalgorithmen 56 - 58 umfassenden Reglers 53 erfolgt in der Weise, dass der Bediener des Mähdreschers 1 während des Betriebes den Regler 53 im einfachsten Fall durch Betätigung eines in die Eingabeeinheit 46 integrierten Schalters 60 aktiviert, wobei die im Moment der Inbetriebnahme ermittelte Überkehrerntegutmenge 41 sowie der ermittelte Überkehrkornanteil 37 die Sollwerte 61 der Regelung und damit den Arbeitspunkt der Regelung bilden. Den Moment der Inbetriebnahme des Reglers 53 legt der Betreiber des Mähdreschers fest. Damit der Betreiber einen optimalen Arbeitspunkt bestimmen kann ist in vorteilhafter Weiterbildung der Erfindung vorgesehen, dass der Betreiber zunächst eine Eichfahrt mit annähernd konstanter Fahrgeschwindigkeit des Mähdreschers 1 und/oder mit annähernd konstantem Erntegutdurchsatz absolviert. Über die Anzeigeeinheit 48 kann der Betreiber des Mähdreschers 1 während dieser sogenannten Eichfahrt den Verlauf der Abscheideverluste 49 sowie der Reinigungsverluste 50 verfolgen. Zudem verfügt im einfachsten Fall die Fahrerkabine 62 über ein Sichtfenster 63 durch welches der Betreiber den in den Korntank 23 geförderten Körnerstrom 20 einsehen kann. Auf diese Weise wird es möglich, dass der Fahrer den Arbeitspunkt des Reglers 53 unter Berücksichtigung niedriger Kornverluste 49, 50 und einer hohen Kornsauberkeit, einem sogenannten subjektiven Sauberkeitshorizont, definieren kann. Zudem können der Eingabeeinheit 46 weitere Bedienelemente 51 zugeordnet sein über die der Betreiber den abzuarbeitenden Regelalgorithmus 56 - 58 vorwählen kann. Es liegt im Rahmen der Erfindung, dass dieses Vorwählen des abzuarbeitenden Regelalgorithmus 56 - 58 dann entbehrlich sein kann, wenn der Regler 53 so programmiert ist, dass dieser nach seiner Inbetriebnahme selbsttätig einen oder mehrere der Regelalgorithmen 56 - 58 abarbeitet, um eine effiziente Regelung der Betriebsparameter 54 an den definierten Sollwerten 61 zu erreichen.

Aufgrund dessen, dass die Überkehrerntegutmenge 41 und der Überkehrkornanteil 37 zeitlich eher als die Kornverluste 49, 50 oder die Sauberkeit des geernteten Körnerstroms 20 auf sich ändernde Randbedingungen wie Erntegutart und -eigenschaften reagieren, können sie quasi als ein Frühdiagnosesystem zur Vermeidung überhöhter Kornverluste 49, 50 oder ansteigender Unsauberkeit des geernteten Körnerstromes 20 herangezogen werden. Die Effizienz dieser Frühdiagnose wird auch dadurch erheblich gesteigert, wenn die in dem Regler 53 hinterlegten Regelalgorithmen 56 - 58 die zwischen den zu optimierenden Betriebsparametern 54, den Kornverlusten 49, 50 sowie der Überkehrerntegutmenge 41 und dem Überkehrkornanteil 37 auftretenden Wechselwirkungen hinreichen genau berücksichtigen.

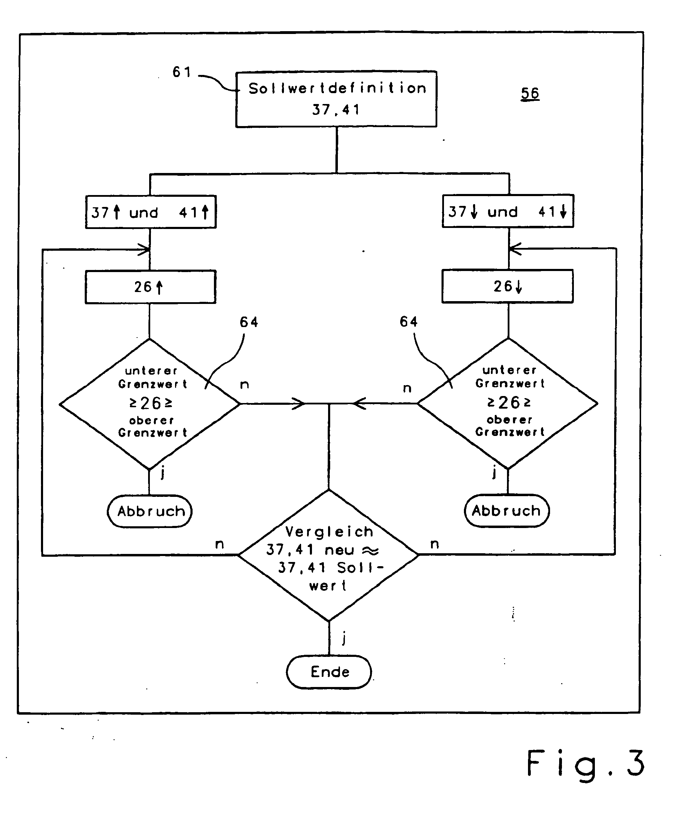

Eine besonders effiziente Optimierung der Untersiebweite 26 ergibt sich gemäß Fig.3 dann, wenn der Regelalgorithmus 56 zur Optimierung der Untersiebweite 26 so angelegt ist, dass ansteigende Überkehrerntegutmengen 41 und ansteigende Überkehrkomanteile 37 solange zu einer Vergrößerung der Untersiebweite 26 führen bis die zuvor definierten Sollwerte 61 für Überkehrerntegutmenge 41 und Überkehrkornanteil 37 wieder erreicht sind. In Analogie hierzu wird bei abnehmender Überkehrerntegutmenge 41 und abnehmendem Überkehrkornanteil 37 eine effiziente Optimierung der Untersiebweite 26 dann erreicht, wenn der entsprechende Regelalgorithmus 56 die Untersiebweite 26 solange verringert, bis die zuvor definierten Sollwerte 61 für Überkehrerntegutmenge 41 und den Überkehrkornanteil 37 wieder erreicht sind.

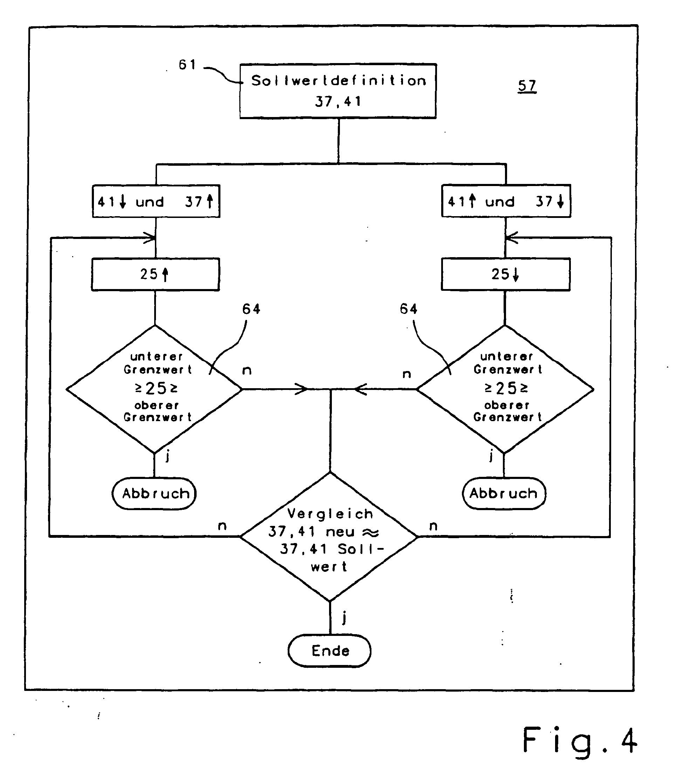

Bezüglich der Optimierung der Obersiebweite 25 wird dann gemäß Fig. 4 eine hohe Effizienz erreicht, wenn der hierfür erforderliche Regelalgorithmus 57 bei abnehmender Überkehrerntegutmenge 41 und zugleich ansteigendem Überkehrkornanteil 37 die Obersiebweite 25 solange erhöht und umgekehrt bei zunehmender Überkehrerntegutmenge 41 und zugleich abnehmender Überkehrkornanteil 37 die Obersiebweite 25 solange verringert, bis die zuvor definierten Sollwerte 61 für Überkehrerntegutmenge 50 und Überkehrkornanteil 51 wieder erreicht sind.

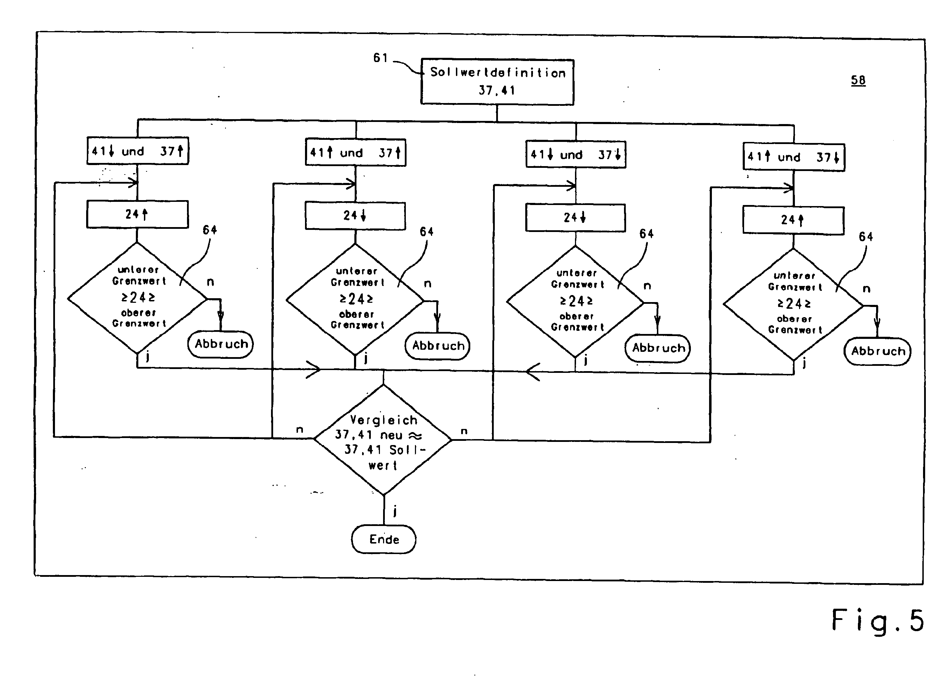

Ein effizienter Regelalgorithmus 58 zur Optimierung der Reinigungsgebläsedrehzahl 24 ergibt sich gemäß Fig. 5 dann, wenn der Regelalgorithmus 56 bei abnehmender Überkehrerntegutmenge 41 und zugleich ansteigendem Überkehrkornanteil 37 die Reinigungsgebläsedrehzahl 24 solange erhöht sowie bei zunehmender Überkehrerntegutmenge 41 zugleich zunehmendem Überkehrkornanteil 37 die Reinigungsgebläsedrehzahl 24 solange verringert wird, bis der ermittelte Sollwert 61 für die Überkehrerntegutmenge 41 und den Überkehrkornanteil 37 wieder erreicht ist. Nehmen hingegen die Überkehrerntegutmenge 41 und der Überkehrkornanteil 37 ab wird die Reinigungsgebläsedrehzahl 24 solange verringert und analog bei zugleich zunehmender Überkehrerntegutmenge 41 und abnehmendem Überkehrkornanteil 37 wird die Reinigungsgebläsedrehzahl 24 solange erhöht, bis der ermittelte Sollwert 61 für die Überkehrerntegutmenge 41 und den Überkehrkornanteil 37 wieder erreicht ist.

In vorteilhafter Weiterbildung der Erfindung können an der Eingabeeinheit 46 weitere Bedienelemente 66 vorgesehen sein, über die der Betreiber Betriebsparameter 54 eingeben kann, sodass diese in an sich bekannter und deshalb nicht beschriebener Weise an den entsprechenden Organen 15, 16, 17 der Reinigungseinrichtung 14 eingestellt werden. Der Regler 53 bewirkt selbsttätig die Einstellung der optimierten Betriebsparameter 54, ohne dass der Betreiber in diesen Einstellvorgang einbezogen ist. Damit die Regelung beispielsweise bei stark schwankenden Erntegutdurchsätzen und -eigenschaften die Einstellmechanismen der Reinigungseinrichtung 14 nicht überfordert, kann der Regel 53 im einfachsten Fall durch wiederholtes Betätigen des Inbetriebnahmeschalters 60 abgeschaltet werden. Zudem muss die Regelung auf für die verschiedenen zu optimierenden Betriebsparameter 54 sinnvolle Werte beschränkt sein. Im einfachsten Fall kann dies dadurch bewirkt werden, dass den Regelalgorithmen 56 - 58 Grenzwerte 64 für die verschiedenen Betriebsparameter 54 zugeordnet sind bei deren Über- oder Unterschreitung nicht mehr in die Überkehrerntegutmenge 41 und den Überkehrkornanteil 37 durch Veränderung der zu optimierenden Betriebsparameter 54 eingegriffen wird. Unter dem gleichen Gesichtspunkt sind in den Regelalgorithmen 56 - 58 gemäß Fig. 2 zudem Störgrößen 65 und zugehörige Toleranzbereiche hinterlegt, bei deren Über- oder Unterschreitung der Regelvorgang abgebrochen wird und der Betreiber akustisch oder visuell zur Definition eines neuen Arbeitspunktes aufgefordert wird, wobei die Störgrößen 65 beispielsweise Ernteguteigenschaften, das Verhältnis von Korndurchsatz zu Überkehrmenge und das Verhältnis von Korndurchsatz zur Gutschichthöhe sein können.

Es liegt im Rahmen des Könnens eines Fachmanns das hier am Beispiel eines Mähdreschers 1 beschriebene Verfahren und die zugehörige Vorrichtung auch in abgewandelter Form anzuwenden sowie einzusetzen, um die beschriebenen Effekte zu erzielen, ohne dabei den Rahmen der Erfindung zu verlassen.

### Bezugszeichenliste:

- 1: Mähdrescher
- 2: Mähwerk
- 3: Schrägförderer
- 4: Erntegutstrom
- 5: Dreschorgane
- 6: Erntegutteilstrom
- 7: Hordenschüttler
- 8: Trenneinrichtung
- 9: Erntegutteilstrom
- 10: Rücklaufboden
- 11: Vorbereitungsboden
- 12: Abscheideverluste
- 13: Erntegutstrom
- 14: Reinigungseinrichtung
- 15: Obersieb
- 16: Untersieb
- 17: Reinigungsgebläse
- 18: Reinigungsverluste
- 19: Gutstrom
- 20: Körnerstrom
- 21: Förderschnecke
- 22: Körnerelevator
- 23: Korntank
- 24: Reinigungsgebläsedrehzahl
- 25: Obersiebweite
- 26: Untersiebweite
- 27: Obersieblamellen
- 28: Untersieblamellen
- 29: Siebfläche Obersieb
- 30: Siebfläche Untersieb
- 31: Überkehrerntegutstrom
- 32: Leitfläche
- 33: Ährenförderschnecke
- 34: Ährenelevator
- 35: Überkehreinrichtung
- 36: Körnerstrommesseinrichtung
- 37: Überkehrkornanteil
- 38: Stabsensor
- 39: Auswert- und Anzeigeeinheit
- 40: Volumenstromsensiereinrichtung
- 41: Überkehrerntegutmenge
- 42: Volumenstromsensiereinrichtung
- 43,44: Kornverlustsensoren
- 45: Arbeitsorgane
- 46: Eingabeeinheit
- 47: Rechen- und Speichermodul
- 48: Anzeigeeinheit
- 49: Abscheideverlust
- 50: Reinigungsverlust
- 51: Bedienelement
- 52: Sinnbild
- 53: Regler
- 54: Betriebsparameter
- 55: Drehzahlsensor
- 56-58: Regelalgorithmen
- 59: entegutspezifische Parameter
- 60: Schalter
- 61: Sollwert
- 62: Fahrerkabine
- 63: Sichtfenster
- 64: Grenzwerte
- 65: Störgrößen
- 66: weitere Bedienelemente

- A: Abscheideverlustsignal
- O: Reinigungsgebläsedrehzahlsignal
- P: Obersiebweitensignale
- Q: Untersiebweitensignale
- R: Reinigungsverlustsignal
- X: Überkehrkornsignal
- Y: Überkehrerntegutmengensignal
- Z: Körnersignal

## Patentansprüche

1. Verfahren zur Regelung zumindest eines Betriebsparameters der Arbeitsorgane eines Mähdreschers, wobei die Arbeitsorgane des Mähdreschers von Dreschorganen sowie diesen nachgeordneten Abscheideorganen und zumindest einer Reinigungsorgane umfassenden Reinigungseinrichtung gebildet werden und die Reinigungseinrichtung mittels zumindest einer Überkehreinrichtung mit den Dreschorganen in Wirkverbindung steht,
**dadurch gekennzeichnet,**
**dass** der Überkehreinrichtung (35) zumindest eine Sensiereinrichtung (36, 40) zur Detektion des Überkehrerntegutstromes (31) zugeordnet ist und die von der zumindest einen Sensiereinrichtung (36, 40) generierten Überkehrerntegutstromsignale (X, Y) in einem Regler (53) zur Regelung eines oder mehrerer Betriebsparameter (54) wenigstens eines Arbeitsorgans (45) herangezogen werden, wobei die Überkehrerntegutstromsignale (X, Y) die Überkehrentegutmenge (41) und der Überkehrkornanteil (37) sind, wobei der Regler (53) einer Auswert- und Anzeigeeinheit (39) zugeordnet ist und in ihm Regelalgorithmen (56 - 58) editierbar hinterlegt sind, die die Reinigungsgebläsedrehzahl (24) und/oder die Obersiebweite (25) und/oder die Untersiebweite (26) zumindest in Abhängigkeit von der Überkehrerntegutmenge (41) und dem Überkehrkornanteil (37) optimieren.

2. Verfahren zur Regelung zumindest eines Betriebsparameters der Arbeitsorgane eines Mähdreschers nach Anspruch 1,
**dadurch gekennzeichnet,**
**dass** das wenigstens eine Arbeitsorgan (45) von der mindestens einen Reinigungseinrichtung (14) gebildet wird und der eine oder die mehreren Betriebsparameter (54) die Reinigungsgebläsedrehzahl (24), die Obersiebweite (25) und die Untersiebweite (26) sein können.

3. Verfahren zur Regelung zumindest eines Betriebsparameters der Arbeitsorgane eines Mähdreschers nach einem der vorhergehenden Ansprüche,
**dadurch gekennzeichnet,**
**dass** die Sensiereinrichtung (36, 40) eine Auswert- und Anzeigeeinheit (39) umfasst, die die Überkehrerntegutstromsignale (X, Y) in Abhängigkeit von Betriebsparametern (24 - 26) der Reinigungseinrichtung (14) erfasst.

4. Verfahren zur Regelung zumindest eines Betriebsparameters der Arbeitsorgane eines Mähdreschers nach einem der vorhergehenden Ansprüche,
**dadurch gekennzeichnet,**
**dass** an sich bekannte Sensiereinrichtungen (43, 44) zur Erfassung der Kornverluste (49, 50) vorhanden sind und die Kornverluste (49, 50) in Abhängigkeit von den Betriebsparametern (24 - 26) der Reinigungseinrichtung (14) erfasst werden.

5. Verfahren zur Regelung zumindest eines Betriebsparameters der Arbeitsorgane eines Mähdreschers nach Anspruch 4,
**dadurch gekennzeichnet,**
**dass** die Kornverluste (49, 50) die Abscheideverluste (49) und/oder die Reinigungsverluste (50) umfassen.

6. Verfahren zur Regelung zumindest eines Betriebsparameters der Arbeitsorgane eines Mähdreschers nach einem der vorhergehenden Ansprüche,
**dadurch gekennzeichnet,**
**dass** der oder die Regelalgorithmen (56 - 58) in Abhängigkeit von den zu optimierenden Betriebsparametern (24 - 26) auswählbar sind.

7. Verfahren zur Regelung zumindest eines Betriebsparameters der Arbeitsorgane eines Mähdreschers nach Anspruchs 6,
**dadurch gekennzeichnet,**
**dass** der Regler (53) einen oder mehrere Regelalgorithmen (56 - 58) nach dem oder den zu regelnden Betriebsparametern (24 - 26) auswählt.

8. Verfahren zur Regelung zumindest eines Betriebsparameters der Arbeitsorgane eines Mähdreschers nach einem der vorhergehenden Ansprüche,
**dadurch gekennzeichnet,**
**dass** der oder die Regelalgorithmen (56 - 58) erntegutspezifische Parameter (59) berücksichtigen und wobei die erntegutspezifischen Parameter (59) der Erntegutdurchsatz, die Erntegutart und Ernteguteigenschaften sein können.

9. Verfahren zur Regelung zumindest eines Betriebsparameters der Arbeitsorgane eines Mähdreschers nach einem der vorhergehenden Ansprüche,
**dadurch gekennzeichnet,**
**dass** die Inbetriebnahme des die Regelalgorithmen (56 - 58) umfassenden Reglers (53) durch den Bediener während es Betriebes des Mähdrescher (1) ausgelöst wird und wobei die im Moment der Inbetriebnahme von der Sensiereinrichtung (36, 40) ermittelten Überkehrerntegutstromsignale (X, Y) die Sollwerte (61) der Regelung eines oder mehrerer Betriebsparameter (54) bilden.

10. Verfahren zur Regelung zumindest eines Betriebsparameters der Arbeitsorgane eines Mähdreschers nach Anspruch 9,
**dadurch gekennzeichnet,**
**dass** die Sollwerte (61) den Arbeitspunkt der Regelung definieren.

11. Verfahren zur Regelung zumindest eines Betriebsparameters der Arbeitsorgane eines Mähdreschers nach einem der vorhergehenden Ansprüche,
**dadurch gekennzeichnet,**
**dass** die Inbetriebnahme des Reglers (53) durch den Betreiber von einem von diesem festgelegten subjektiven Kornsauberkeitshorizont und niedrigen Kornverlusten (49, 50) bestimmt wird.

12. Verfahren zur Regelung zumindest eines Betriebsparameters der Arbeitsorgane eines Mähdreschers nach einem der vorhergehenden Ansprüche,
**dadurch gekennzeichnet,**
**dass** der Mähdrescher (1) im Moment der Inbetriebnahme des Reglers (53) eine Eichfahrt mit annähernd konstanter Geschwindigkeit oder annähernd konstantem Erntegutdurchsatz absolviert.

13. Verfahren zur Regelung zumindest eines Betriebsparameters der Arbeitsorgane eines Mähdreschers nach einem der vorhergehenden Ansprüche,
**dadurch gekennzeichnet,**
**dass** der zu optimierende Betriebsparameter (54) die Untersiebweite (26) ist und das der Regelalgorithmus (56) bei ansteigender Überkehrerntegutmenge (41) und ansteigendem Überkehrkornanteil (37) die Untersiebweite (26) solange vergrößert sowie bei abnehmender Überkehrerntegutmenge (41) und abnehmendem Überkehrkornanteil (37) die Untersiebweite (26) solange verringert, bis der ermittelte Sollwert (61) für die Überkehrerntegutmenge (41) und den Überkehrkornanteil (37) wieder erreicht ist.

14. Verfahren zur Regelung zumindest eines Betriebsparameters der Arbeitsorgane eines Mähdreschers nach einem der vorhergehenden Ansprüche,
**dadurch gekennzeichnet,**
**dass** der zu optimierende Betriebsparameter (54) die Obersiebweite (25) ist und das der Regelalgorithmus (57) bei ansteigender Überkehrerntegutmenge (41) und abnehmendem Überkehrkornanteil (37) die Obersiebweit (25) solange verringert sowie bei abnehmender Überkehrerntegutmenge (41) und ansteigendem -Oberkehrkornanteil (37) die Obersiebweite (25) solange vergrößert, bis der ermittelte Sollwert (61) für die Überkehrerntegutmenge (41) und den Überkehrkornanteil (37) wieder erreicht ist.

15. Verfahren zur Regelung zumindest eines Betriebsparameters der Arbeitsorgane eines Mähdreschers nach einem der vorhergehenden Ansprüche,
**dadurch gekennzeichnet,**
**dass** der zu optimierende Betriebsparameter (54) die Reinigungsgebläsedrehzahl (24) ist und das der Regelalgorithmus (58) bei abnehmender Überkehrerntegutmenge (41) und ansteigendem Überkehrkornanteil (37) die Reinigungsgebläsedrehzahl (24) solange erhöht sowie bei zunehmender Überkehrerntegutmenge (41) und zunehmendem Überkehrkornanteil (37) die Reinigungsgebläsedrehzahl (24) solange verringert, bis der ermittelte Sollwert (61) für die Überkehrerntegutmenge (41) und den Überkehrkornanteil (37) wieder erreicht ist.

16. Verfahren zur Regelung zumindest eines Betriebsparameters der Arbeitsorgane eines Mähdreschers nach einem der vorhergehenden Ansprüche,
**dadurch gekennzeichnet,**
**dass** der zu optimierende Betriebsparameter (54) die Reinigungsgebläsedrehzahl (24) ist und das der Regelalgorithmus (58) bei abnehmender Überkehrerntegutmenge (41) und abnehmendem Überkehrkornanteil (37) die Reinigungsgebläsedrehzahl (24) solange verringert sowie bei zunehmender Überkehrerntegutmenge (41) und abnehmendem Überkehrkornanteil (37) die Reinigungsgebläsedrehzahl (24) solange erhöht, bis der ermittelte Sollwert (61) für die Überkehrerntegutmenge (41) und den Überkehrkornanteil (37) wieder erreicht ist.

17. Verfahren zur Regelung zumindest eines Betriebsparameters der Arbeitsorgane eines Mähdreschers nach einem der vorhergehenden Ansprüche,
**dadurch gekennzeichnet,**
**dass** der Regler (53) abschaltbar ist.

18. Verfahren zur Regelung zumindest eines Betriebsparameters der Arbeitsorgane eines Mähdreschers nach einem der vorhergehenden Ansprüche,
**dadurch gekennzeichnet,**
**dass** für die vom Regler (53) zu ermittelnden Betriebsparameter (54) obere und/oder untere Grenzwerte (64) in dem Regler (53) hinterlegt sind.

19. Verfahren zur Regelung zumindest eines Betriebsparameters der Arbeitsorgane eines Mähdreschers nach einem der vorhergehenden Ansprüche,
**dadurch gekennzeichnet,**
**dass** die in dem Regler (53) hinterlegten Regelalgorithmen (56 - 58) Störgrößen (65) und diesen zugeordnete Toleranzbereiche berücksichtigen bei deren Über- oder Unterschreitung der Regelvorgang abgebrochen und der Betreiber zur Eingabe eines neuen Arbeitspunktes aufgefordert wird.

20. Verfahren zur Regelung zumindest eines Betriebsparameters der Arbeitsorgane eines Mähdreschers nach einem der vorhergehenden Ansprüche,
**dadurch gekennzeichnet,**
**dass** die Störgrößen (65) Ernteguteigenschaften und/oder das Verhältnis von Korndurchsatz zu Überkehrerntegutmenge (41) und/oder das Verhältnis von Korndurchsatz zu Gutschichthöhe sein können.

21. Vorrichtung zur Durchführung des Verfahrens nach Anspruch 1,
**dadurch gekennzeichnet,**
**dass** der Überkehreinrichtung (35) zumindest eine Sensiereinrichtung (36, 40) zur Detektion des Überkehrerntegutstromes (31) zugeordnet ist und die von der zumindest einen Sensiereinrichtung (36, 40) generierten Überkehrerntegutstromsignale (X, Y) einer zumindest einen Regler (53) umfassenden Auswert- und Anzeigeeinheit (39) übergeben werden und wobei die Überkehrerntegutstromsignale (X, Y) die Sollwerte einer von dem Regler (53) bewirkten Regelung zur Optimierung eines oder mehrerer Betriebsparameter (54) wenigstens eines Arbeitsorgans (45) bilden, wobei die Überkehrerntegutstromsignale (X, Y) die Überkehrentegutmenge (41) und der Überkehrkornanteil (37) sind, wobei der Regler (53) einer Auswert- und Anzeigeeinheit (39) zugeordnet ist und in ihm Regelalgorithmen (56 - 58) editierbar hinterlegt sind, die die Reinigungsgebläsedrehzahl (24) und/oder die Obersiebweite (25) und/oder die Untersiebweite (26) zumindest in Abhängigkeit von der Überkehrerntegutmenge (41) und dem Überkehrkornanteil (37) optimieren.

## Claims

1. A method of regulating at least one operating parameter of the working members of a combine harvester, wherein the working members of the combine harvester are formed by threshing members and separating members arranged downstream thereof and at least one cleaning device including cleaning members and the cleaning device Is operatively connected to the threshing members by means of at least one transposition device,
**characterised in that**
at least one sensing device (36, 40) is associated with the transposition device (35) for detection of the transposition crop material flow (31) and the transposition crop material flow signals (X, Y) generated by the at least one sensing device (36, 40) are used in a regulator (53) for regulating one or more operating parameters (54) of at least one working member (45), wherein the transposition crop material flow signals (X, Y) are the transposition crop material amount (41) and the transposition grain proportion (37), wherein the regulator (53) is associated with an evaluation and display unit (39) and regulating algorithms (56-58) are editably stored therein, which algorithms optimise the cleaning blower rotary speed (24) and/or the upper sieve mesh (25) and/or the lower sieve mesh (26) at least in dependence on the transposition crop material amount (41) and the transposition grain proportion (37).

2. A method of regulating at least one operating parameter of the working members of a combine harvester according to claim 1, **characterised in that** the at least one working member (45) is formed by the at least one cleaning device (14) and the one or more operating parameters (54) can be the cleaning blower rotary speed (24), the upper sieve mesh (25) and the lower sieve mesh (26).

3. A method of regulating at least one operating parameter of the working members of a combine harvester according to one of the preceding claims, **characterised in that** the sensing device (36, 40) includes an evaluation and display unit (39) which detects the transposition crop material flow signals (X, Y) in dependence on operating parameters (24-26) of the cleaning device (14).

4. A method of regulating at least one operating parameter of the working members of a combine harvester according to one of the preceding claims, **characterised in that** there are per se known sensing devices (43, 44) for detecting the grain losses (49, 50) and the grain losses (49, 50) are detected in dependence on the operating parameters (24-26) of the cleaning device (14).

5. A method of regulating at least one operating parameter of the working members of a combine harvester according to claim 4, **characterised in that** the grain losses (49, 50) include the separating losses (49) and/or the grain losses (50).

6. A method of regulating at least one operating parameter of the working members of a combine harvester according to one of the preceding claims, **characterised In that** the regulating algorithm or algorithms (56-58) can be selected In dependence on the operating parameters (24-26) to be optimised.

7. A method of regulating at least one operating parameter of the working members of a combine harvester according to claim 6, **characterised in that** the regulator (53) selects one or more regulating algorithms (56-58) in accordance with the operating parameter or parameters (24-26) to be regulated.

8. A method of regulating at least one operating parameter of the working members of a combine harvester according to one of the preceding claims, **characterised in that** the regulating algorithm or algorithms (56-58) take account of crop material-specific parameters (59) and wherein the crop material-specific parameters (59) can be the crop material through-put, the crop material type and crop material properties.

9. A method of regulating at least one operating parameter of the working members of a combine harvester according to one of the preceding claims, **characterised in that** start-up of the regulator (53) which includes the regulating algorithms (56-58) is triggered by the operator during operation of the combine harvester (1) and wherein the transposition crop material flow signals (X, Y) which are determined by the sensing device (36, 40) at the time of start-up form the reference values (61) for regulation of one or more operating parameters (54).

10. A method of regulating at least one operating parameter of the working members of a combine harvester according to claim 9, **characterised in that** the reference values (61) define the working point for the regulation procedure.

11. A method of regulating at least one operating parameter of the working members of a combine harvester according to one of the preceding claims, **characterised in that** start-up of the regulator (53) is determined by the operator by a subjective grain cleanliness horizon established by the operator and low grain losses (49, 50).

12. A method of regulating at least one operating parameter of the working members of a combine harvester according to one of the preceding claims, **characterised in that** at the time of start-up of the regulator (53) the combine harvester (1) completes a calibration travel at approximately constant speed or with an approximately constant crop material through-put,

13. A method of regulating at least one operating parameter of the working members of a combine harvester according to one of the preceding claims, **characterised in that** the operating parameter (54) to be optimised is the lower sieve mesh (26) and the regulating algorithm (56) increases the lower sieve mesh (26) with an increasing transposition crop material amount (41) and an increasing transposition grain proportion (37) and reduces the lower sieve mesh (26) with a decreasing transposition crop material amount (41) and a decreasing transposition grain proportion (37), until the ascertained reference value (61) is regained for the transposition crop material amount (41) and the transposition grain proportion (37).

14. A method of regulating at least one operating parameter of the working members of a combine harvester according to one of the preceding claims, **characterised in that** the operating parameter (54) to be optimised is the upper sieve mesh (25) and the regulating algorithm (57) reduces the upper sieve mesh (25) with an increasing transposition crop material amount (41) and a decreasing transposition grain proportion (37) and increases the upper sieve mesh (25) with a decreasing transposition crop material amount (41) and an increasing transposition grain proportion (37), until the ascertained reference value (61) is regained for the transposition crop material amount (41) and the transposition grain proportion (37).

15. A method of regulating at least one operating parameter of the working members of a combine harvester according to one of the preceding claims, **characterised in that** the operating parameter (54) to be optimised is the cleaning blower rotary speed (24) and the regulating algorithm (58) Increases the cleaning blower rotary speed (24) with a decreasing transposition crop material amount (41) and an increasing transposition grain proportion (37) and reduces the cleaning blower rotary speed (24) with an increasing transposition crop material amount (41) and an Increasing transposition grain proportion (37) until the ascertained reference value (61) is regained for the transposition crop material amount (41) and the transposition grain proportion (37).

16. A method of regulating at least one operating parameter of the working members of a combine harvester according to one of the preceding claims, **characterised in that** the operating parameter (54) to be optimised is the cleaning blower rotary speed (24) and the regulating algorithm (58) reduces the cleaning blower rotary speed (24) with a decreasing transposition crop material amount (41) and a decreasing transposition grain proportion (37) and increases the cleaning blower rotary speed (24) with an increasing transposition crop material amount (41) and a decreasing transposition grain proportion (37) until the ascertained reference value (61) is regained for the transposition crop material amount (A1) and the transposition grain proportion (37).

17. A method of regulating at least one operating parameter of the working members of a combine harvester according to one of the preceding claims, **characterised in that** the regulator (53) can be switched off.

18. A method of regulating at least one operating parameter of the working members of a combine harvester according to one of the preceding claims, **characterised in that** upper and/or limit values (64) are stored in the regulator (53) for the operating parameters (54) to be determined by the regulator (53).

19. A method of regulating at least one operating parameter of the working members of a combine harvester according to one of the preceding claims, **characterised in that** the regulating algorithms (56-58) stored in the regulator (53) take account of interference variables (65) and tolerance ranges associated therewith, wherein the regulating operation is interrupted when the tolerances rise above or fall below the tolerance ranges, and the operator Is required to input a new working point.

20. A method of regulating at least one operating parameter of the working members of a combine harvester according to one of the preceding claims, **characterised in that** the interference variables (65) can be crop material properties and/or the ratio of grain through-put to transposition crop material amount (41) and/or the ratio of grain through-put to the material layer height.

21. Apparatus for carrying out the method according to claim 1, **characterised in that** at least one sensing device (36, 40) is associated with the transposition device (35) for detection of the transposition crop material flow (31) and the transposition crop material flow signals (X, Y) generated by the at least one sensing device (36, 40) are passed to an evaluating and display unit (39) including at least one regulator (53), and wherein the transposition crop material flow signals (X, Y) form the reference values for regulation brought about by the regulator (53) for optimising one or more operating parameters (54) of at least one working member (45), wherein the transposition crop material flow signals (X, Y) are the transposition crop material amount (41) and the transposition grain proportion (37), wherein the regulator (53) is associated with an evaluation and display unit (39) and regulating algorithms (56-58) are editably stored therein, which algorithms optimise the cleaning blower rotary speed (24) and/or the upper sieve mesh (25) and/or the lower sieve mesh (26) at least in dependence on the transposition crop material amount (41) and the transposition grain proportion (37).

## Revendications

1. Procédé de réglage d'au moins un paramètre de fonctionnement des organes de travail d'une moissonneuse-batteuse, les organes de travail de la moissonneuse-batteuse étant formés d'organes de battage ainsi que d'organes de coupe placés en aval de ceux-ci et d'au moins un dispositif de nettoyage comprenant des organes de nettoyage et le dispositif de nettoyage coopérant avec les organes de battage par l'intermédiaire d'au moins un dispositif de retour des otons,
**caractérisé par le fait qu'**
au dispositif de retour des otons (35) est associé au moins un système de capteurs (36, 40) pour la surveillance du flux d'otons (31) et que les signaux (X, Y) de flux d'otons générés par au moins un système de capteurs (36, 40), sont utilisés dans un moyen de régulation (53) pour régler un ou plusieurs paramètre(s) de fonctionnement (54) d'au moins un organe de travail (45), les signaux (X, Y) de flux d'otons étant le débit d'otons (41) et la part de grains (37) dans les otons, et l'unité de traitement et d'affichage (39) comprend un moyen de régulation (53) dans lequel sont mémorisés avec possibilité d'édition, des algorithmes de réglage (56-58) qui optimisent la vitesse de rotation (24) de la soufflante de nettoyage, et/ou l'ouverture de maille (25) du tamis supérieur et/ou l'ouverture de maille (26) du tamis inférieur au moins en fonction du débit d'otons (41) et de la part de grains (37) dans les otons.

2. Procédé de réglage d'au moins un paramètre de fonctionnement des organes de travail d'une moissonneuse-batteuse selon la revendication 1,
**caractérisé par le fait que**
l'organe de travail (45) au nombre d'au moins un est formé par le dispositif de nettoyage (14) au nombre d'au moins un et que le ou les paramètre(s) de fonctionnement (54) peut (peuvent) être la vitesse de rotation (24) de la soufflante de nettoyage, l'ouverture de maille (25) du tamis supérieur et l'ouverture de maille (26) du tamis inférieur.

3. Procédé de réglage d'au moins un paramètre de fonctionnement des organes de travail d'une moissonneuse-batteuse selon une des revendications précédentes,
**caractérisé par le fait que**
le système de capteurs (36, 40) comprend une unité de traitement et d'affichage (39) qui traite les signaux (X, Y) de flux d'otons en fonction de paramètre(s) de fonctionnement (24-26) du dispositif de nettoyage (14).

4. Procédé de réglage d'au moins un paramètre de fonctionnement des organes de travail d'une moissonneuse-batteuse selon une des revendications précédentes,
**caractérisé par le fait qu'**
il est prévu des dispositifs de capteurs (43, 44) connus pour la mesure des pertes en grains (49, 50) et que les pertes en grains (49, 50) sont déterminées en fonction des paramètres de fonctionnement (24-26) du dispositif de nettoyage (14).

5. Procédé de réglage d'au moins un paramètre de fonctionnement des organes de travail d'une moissonneuse-batteuse selon la revendication 4 précédentes,
**caractérisé par le fait que**
les pertes en grains (49, 50) comprennent les pertes de séparation (49) et/ou les pertes de nettoyage (50).

6. Procédé de réglage d'au moins un paramètre de fonctionnement des organes de travail d'une moissonneuse-batteuse selon une des revendications précédentes,
**caractérisé par le fait que**
le ou les algorithmes de réglage (56-58) peuvent être sélectionnés en fonction des paramètres de fonctionnement (24-26) à optimiser.

7. Procédé de réglage d'au moins un paramètre de fonctionnement des organes de travail d'une moissonneuse-batteuse selon la revendication 6,
**caractérisé par le fait que**
le moyen de régulation (53) sélectionne un ou plusieurs algorithmes de réglage (56-58) en fonction du ou des paramètres de fonctionnement (24-26) à régler.

8. Procédé de réglage d'au moins un paramètre de fonctionnement des organes de travail d'une moissonneuse-batteuse selon une des revendications précédentes,
**caractérisé par le fait que**
le ou les algorithmes de réglage (56-58) tiennent compte de paramètres (59) spécifiques du produit récolté, les paramètres (59) spécifiques du produit récolté pouvant être le débit de produit récolté, le type de produit récolté et les propriétés du produit récolté.

9. Procédé de réglage d'au moins un paramètre de fonctionnement des organes de travail d'une moissonneuse-batteuse selon une des revendications précédentes,
**caractérisé par le fait que**
la mise en service du moyen de régulation (53) comprenant les algorithmes de réglage (56-58) est déclenchée par l'utilisateur pendant le fonctionnement de la moissonneuse-batteuse (1), les signaux (X, Y) de flux d'otons enregistrés au moment de la mise en service du système de capteurs (36, 40) constituant les valeurs de consigne (61) de régulation d'un ou plusieurs paramètres de fonctionnement (54).

10. Procédé de réglage d'au moins un paramètre de fonctionnement des organes de travail d'une moissonneuse-batteuse selon la revendication 9,
**caractérisé par le fait que**
les valeurs de consigne (61) définissent le point de travail de la régulation.

11. Procédé de réglage d'au moins un paramètre de fonctionnement des organes de travail d'une moissonneuse-batteuse selon une des revendications précédentes,
**caractérisé par le fait que**
la mise en service du moyen de régulation (53) par l'utilisateur est déterminée par un but subjectif, fixé par l'utilisateur, de propreté du grain et de faibles pertes en grains (49, 50).

12. Procédé de réglage d'au moins un paramètre de fonctionnement des organes de travail d'une moissonneuse-batteuse selon une des revendications précédentes,
**caractérisé par le fait que**
la moissonneuse-batteuse (1) au moment de la mise en service du moyen de régulation (53) effectue un parcours d'étalonnage à vitesse sensiblement constante ou avec un débit de produit récolté sensiblement constant.

13. Procédé de réglage d'au moins un paramètre de fonctionnement des organes de travail d'une moissonneuse-batteuse selon une des revendications précédentes,
**caractérisé par le fait que**
le paramètre de fonctionnement (54) à optimiser est l'ouverture de maille (26) du tamis inférieur et que l'algorithme de réglage (56), lorsque le débit d'otons (41) croît et la part de grains (37) dans les otons croît, augmente l'ouverture de maille (26) du tamis inférieur et, lorsque le débit d'otons (41) décroit, réduit l'ouverture de maille (26) du tamis inférieur jusqu'à ce que la valeur de consigne (61) définie pour le débit d'otons (41) et la part de grains (37) dans les otons soit de nouveau atteinte.

14. Procédé de réglage d'au moins un paramètre de fonctionnement des organes de travail d'une moissonneuse-batteuse selon une des revendications précédentes,
**caractérisé par le fait que**
le paramètre de fonctionnement (54) à optimiser est l'ouverture de maille (25) du tamis supérieur et que l'algorithme de réglage (57), lorsque le débit d'otons (41) croît et la part de grains (37) dans les otons décroît, réduit l'ouverture de maille (25) du tamis supérieur et, lorsque le débit d'otons (41) décroît et la part de grains (37) dans les otons croît, augmente l'ouverture de maille (25) du tamis supérieur jusqu'à ce que la valeur de consigne (61) définie pour le débit d'otons (41) et la part de grains (37) dans les otons soit de nouveau atteinte.

15. Procédé de réglage d'au moins un paramètre de fonctionnement des organes de travail d'une moissonneuse-batteuse selon une des revendications précédentes,
**caractérisé par le fait que**
le paramètre de fonctionnement (54) à optimiser est la vitesse de rotation (24) de la soufflante de nettoyage et que l'algorithme de réglage (58), lorsque le débit d'otons (41) décroît et la part de grains (37) dans les otons croît, augmente la vitesse de rotation (24) de la soufflante de nettoyage et, lorsque le débit d'otons (41) croît et la part de grains (37) dans les otons croît, réduit la vitesse de rotation (24) de la soufflante de nettoyage, jusqu'à ce que la valeur de consigne (61) définie pour le débit d'otons (41) et la part de grains (37) dans les otons soit de nouveau atteinte.

16. Procédé de réglage d'au moins un paramètre de fonctionnement des organes de travail d'une moissonneuse-batteuse selon une des revendications précédentes,
**caractérisé par le fait que**
le paramètre de fonctionnement (54) à optimiser est la vitesse de rotation (24) de la soufflante de nettoyage et que l'algorithme de réglage (58), lorsque le débit d'otons (41) décroît et la part de grains (37) dans les otons décroît, réduit la vitesse de rotation (24) de la soufflante de nettoyage et, lorsque le débit d'otons (41) croît et la part de grains (37) dans les otons décroît, augmente la vitesse de rotation (24) de la soufflante de nettoyage, jusqu'à ce que la valeur de consigne (61) définie pour le débit d'otons (41) et la part de grains (37) dans les otons soit de nouveau atteinte.

17. Procédé de réglage d'au moins un paramètre de fonctionnement des organes de travail d'une moissonneuse-batteuse selon une des revendications précédentes,
**caractérisé par le fait que**
le moyen de régulation (53) peut être déconnecté.

18. Procédé de réglage d'au moins un paramètre de fonctionnement des organes de travail d'une moissonneuse-batteuse selon une des revendications précédentes,
**caractérisé par le fait que**
des valeurs limites (64) supérieures et/ou inférieures pour les paramètres de fonctionnement (54) à déterminer par le moyen de régulation (53) sont mémorisées dans le moyen de régulation (53)

19. Procédé de réglage d'au moins un paramètre de fonctionnement des organes de travail d'une moissonneuse-batteuse selon une des revendications précédentes,
**caractérisé par le fait que**
les algorithmes (56-58) mémorisés dans le moyen de régulation (53) tiennent compte de grandeurs perturbatrices (65) et de plages de tolérances correspondantes, dont le dépassement provoque l'interruption du processus de réglage et contraint l'utilisateur à entrer un nouveau point de fonctionnement.

20. Procédé de réglage d'au moins un paramètre de fonctionnement des organes de travail d'une moissonneuse-batteuse selon une des revendications précédentes,
**caractérisé par le fait que**
les grandeurs perturbatrices (65) peuvent être des caractéristiques du produit à récolter et/ou le rapport du débit de grains au débit d'otons (41) et/ou le rapport du débit de grains à la hauteur de produit.

21. Dispositif pour la mise en oeuvre du procédé selon la revendication 1,
**caractérisé par le fait qu'**
au dispositif de retour des otons (35) est associé au moins un système de capteurs (36, 40) pour la surveillance du flux d'otons (31) et que les signaux (X, Y) de flux d'otons générés par au moins un système de capteurs (36, 40), sont transmis à une unité de traitement et d'affichage (39) comprenant au moins un moyen de régulation (53) et les signaux (X, Y) de flux d'otons forment les valeurs de consigne d'une régulation par le moyen de régulation (53) pour optimiser un ou plusieurs paramètre(s) de fonctionnement (54) d'au moins un organe de travail (45), les signaux (X, Y) de flux d'otons étant le débit d'otons (41) et la part de grains (37) dans les otons, et l'unité de traitement et d'affichage (39) comprend un moyen de régulation (53) dans lequel sont mémorisés avec possibilité d'édition, des algorithmes de réglage (56-58) qui optimisent la vitesse de rotation (24) de la soufflante de nettoyage, et/ou l'ouverture de maille (25) du tamis supérieur et/ou l'ouverture de maille (26) du tamis inférieur au moins en fonction du débit d'otons (41) et de la part de grains (37) dans les otons.
